# EUROPÄISCHE PATENTSCHRIFT

(11) **EP 0 676 581 B1**
(45) Veröffentlichungstag und Bekanntmachung des Hinweises auf die Patenterteilung: **27.12.1996**
(21) Anmeldenummer: 95103185.5
(22) Anmeldetag: 06.03.1995
(51) Int. Cl.: F16M 11/06

(54) **Plattenlageranordnung, insbesondere Vorrichtung zum Tragen eines aufrecht stehenden Objekts**
Plates supporting device, especially device for supporting an upright object
Dispositif de support de plaques, en particulier dispositif de support d'un objet vertical

(30) Priorität: 08.04.1994 DE 4412178
(43) Veröffentlichungstag der Anmeldung: 11.10.1995
(73) Patentinhaber: Kusser, Josef, D-94529 Aicha v. Wald (DE)
(72) Erfinder: Kusser, Josef, D-94529 Aicha v. Wald (DE)
(74) Vertreter: Marx, Lothar, Dr.

(56) Entgegenhaltungen:
- EP-A- 0 529 613
- DE-A- 3 802 561
- DE-C- 764 876
- DE-U- 9 319 273
- FR-A- 2 404 163

## Beschreibung

Die Erfindung betrifft eine Plattenlageranordnung und insbesondere eine Vorrichtung zum Tragen eines aufrecht stehenden Objekts, z.B.eines Kunstobjekts, eines Firmenzeichens oder eines Denkmals, der im Oberbegriff des Anspruchs 1 beschriebenen Gattung.

Solche Vorrichtungen sind insbesondere von etwa in Parks aufgestellten Denkmälern oder Kunstobjekten her bekannt, wobei in vielen Fällen der eigentlich das Objekt tragende Sockel auf einer großzügig dimensionierten Basis befestigt ist, um dem Objekt eine geeignete exponierte Höhenlage zu geben.

Die vorbeschriebenen Vorrichtungen weisen allerdings den Nachteil auf, daß die auf ihr aufgestellten Objekte aufgrund ihrer statischen Ruhe oftmals nicht dazu geeignet sind, die Aufmerksamkeit von Passanten zu erregen.

Bei vielbeachteten Kunstobjekten ist es wiederum meist wegen des Andrangs von Betrachtern sehr schwer, sich das Objekt von allen Seiten anzusehen, da die große Anzahl weiterer Betrachter den Zugang von allen Seiten sehr schwer möglich macht.

Aus der FR-A-2 404 163 ist eine Drehlageranordnung gemäß dem Oberbegriff des Anspruchs 1 bekannt. Diese weist einen unteren Steintisch und einen oberen drehbaren Steintisch auf, an dem ein Zentrierdorn angeordnet ist, welcher in eine Ausnehmung des unteren Tisches hineinragt und dort befestigt ist. Der obere Tisch ist drehbar über Wälzlager am Zentrierdorn gelagert. Schon die relativ geringe Reibung in den Wälzlagern führt hier zu einem relativ frühen Stillstand der oberen Platte, falls diese nicht ständig angetrieben wird.

Es ist die Aufgabe der vorliegenden Erfindung, eine Plattenlageranordnung, insbesondere eine Vorrichtung zum Tragen eines aufrecht stehenden Objekts zu schaffen, die die oben genannten Nachteile überwindet. Insbesondere sollen die Reibungsverluste zwischen den Platten auf ein Minimum abgesenkt werden.

Diese Aufgabe wird durch eine Plattenlageranordnung gelöst, die gemäß dem kennzeichnenden Teil des Anspruchs 1 ausgestaltet ist.

Der Vorteil der erfindungsgemäßen Anordnung besteht insbesondere darin, daß die Reibung zwischen der auf einem Flüssigkeitsfilm schwimmend um eine lotrechte Achse drehbar gelagerten Sockelplatte und der Basisplatte äußerst gering ist. Aus diesem Grund wird die z.B. ein Objekt tragende Sockelplatte schon bei der Einwirkung geringer Kräfte, z.B. leichtes Anstoßen durch einen Betrachter oder eventuell auftretende Unregelmäßigkeiten in der Richtung der Flüssigkeitszuführung, beginnen, sich um einen lotrechte Achse zu drehen. Durch diesen für Kunst- oder ähnliche Objekte ungewöhnlichen Effekt wird die Aufmerksamkeit von Passanten auf das ausgestellte Objekt gelenkt, die möglicherweise ein statisch ruhendes Objekt außer acht gelassen hätten.

Desweiteren besteht vorteilhafterweise bei vielbeachteten, entweder durch viele Betrachter oder andere Umstände unzugänglichen Objekten die Möglichkeit für jeden Betrachter, das Objekt von einem Platz aus von allen Seiten zu besichtigen, ohne den eigenen Standort zu wechseln, einfach dadurch, daß es in Drehung versetzt wird.

Zweckmäßige Ausgestaltungen der erfindungsgemäßen Plattenlageranordnung werden durch die Unteransprüche beschrieben.

Es besteht die Möglichkeit, die erfindungsgemäße Anordnung so auszugestalten, daß die Basisplatte eine sich zu ihrer Oberseite hin öffnende Ausnehmung aufweist, die einen von der Unterseite der Sockelplatte abstehenden Zentriervorsprung schwimmend aufnimmt. Hierbei ist die Ausnehmung mit mindestens einer Flüssigkeit in einen Spalt zwischen der Ausnehmung und dem Zentriervorsprung drückenden Flüssigkeitszuführung versehen.

Weiterhin ist es möglich, die Plattenanordnung so auszubilden, daß die Sockelplatte eine sich zu ihrer Unterseite hin öffnende Ausnehmung aufweist, die einen von der Oberseite der Basisplatte abstehenden Zentriervorsprung schwimmend aufnimmt wobei die Basisplatte mit mindestens einer Flüssigkeit in einen Spalt zwischen der Ausnehmung und dem Zentriervorsprung drückenden Flüssigkeitszuführung versehen ist.

Auf diese beiden Arten kann eine vorteilhafte Zentrierung der Sockelplatte auf der Basisplatte gewährleistet werden, wobei bei der Zuführung der Flüssigkeit durch die Ausnehmung unerwünschte Reibungseffekte zwischen dem Zentriervorsprung und der Ausnehmung vermieden werden.

Vorzugsweise sind die Flächen der Basisplatte und der Sockelplatte, die ohne Flüssigkeitsfilm aufeinander zu liegen kämen, plan geschliffen, wodurch die Herstellung und Aufrechterhaltung eines durch einen Flüssigkeitsfilm ausgefüllten Spalts im gesamten Bereich dieser Flächen ermöglicht wird.

In einer Ausgestaltung der erfindungsgemäßen Anordnung sind der Zentriervorsprung bzw. die Ausnehmung jeweils zentrisch auf der Sockelplatte bzw. der Basisplatte angeordnet, wodurch bei der Aufstellung eines Objektes, dessen Schwerpunkt ebenfalls zentrisch über der Sockelplatte zu liegen kommen sollte, eine sehr gleichmäßige Kraftverteilung auf den Flüssigkeitsfilm zustandekommt und sich auch bei exzentrischer Anordnung des oben genannten Schwerpunkts keine den Flüssigkeitsfilm zu stark schwächenden Momente ergeben.

Eine kreisförmige Ausbildung der Sockelplatte kann dazu beitragen, Unwuchten bei ihrer Drehbewegung zu vermeiden.

Bei einer bevorzugten Ausführungsform sind ein zumindest teilweise kugelkalottenförmig ausgebildeter Körper als Zentriervorsprung und eine diesen im wesentlichen paßgenau aufnehmende, zumindest teilweise kugelkalottenförmig ausgebildete Ausnehmung vorgesehen. Der Spalt zwischen den beiden kugelkalottenförmigen Bauteilen kann hierbei sehr gleichmäßig aufgrund seiner hydrodynamisch günstigen Eigenschaften von dem Flüssigkeitsfilm durchströmt und gefüllt werden, wobei auch eine günstige seitliche Zentrierung erreicht wird.

Nach einer alternativen Ausführungsform sind ein zumindest teilweise zylindrisch ausgebildeter Körper als Zentriervorrichtung und eine diesen im wesentlichen paßgenau aufnehmenden, zumindest teilweise zylindrisch ausgebildete Ausnehmung vorgesehen.

Eine solche Ausgestaltung der Ausnehmung bzw. des Zentriervorsprungs ist sehr einfach und kostengünstig herzustellen und bietet eine optimale Zentrierung der Sockelplatte.

Nach einer weiteren Ausgestaltung der erfindungsgemäßen Plattenlageranordnung ist die Flüssigkeitszuführung zentrisch mit der Rotationsachse der Sockelplatte fluchtend in der Ausnehmung angeordnet. Hierdurch kann erreicht werden, daß der Zentriervorsprung in der Ausnehmung gleichmäßig umströmt wird und selbst bei sehr exzentrisch belasteten Sockelplatten keine zu starke Verengung des Flüssigkeitsfilms stattfindet.

Nach einer bevorzugten Ausführungsform ist die Anordnung gemäß der vorliegenden Erfindung so ausgestaltet, daß die Flüssigkeitszuführung so in der Ausnehmung angeordnet ist, daß der daraus austretende Flüssigkeitsstrahl schräg auf eine untere Fläche des Zentriervorsprungs der Sockelplatte trifft.

Auf diese Weise kann, da die Sockelplatte aufgrund ihrer geringen Reibung mit der Basisplatte sehr leicht beweglich ist, schon z.B. durch eine einfache schräge Anordnung der Flüssigkeitszuleitung gewährleistet werden, daß sich das zu tragende Objekt zusammen mit der Sockelplatte ständig gleichförmig dreht.

In weiterer vorteilhafter Ausgestaltung einer Ausführungsform mit einem zylindrischen Zentriervorsprung bzw. einer zylindrischen Ausnehmung sind die aus den Flüssigkeitszuführungen austretenden Strahlen zumindest zum Teil zur Zentrierung des zylinderförmigen Zentriervorsprungs symmetrisch auf dessen zylindrische Oberfläche gerichtet.

Hierbei besteht die Möglichkeit, auch bei eventuell auftretenden starken Seitenkräften einen Kontakt der zylindrischen Flächen der Ausnehmung bzw. des Zentriervorsprungs zu vermeiden.

Die Flüssigkeitszuführung kann vorteilhafterweise aus mindestens einer Bohrung in der Basisplatte bestehen, wodurch eine kostengünstige und einfache Herstellung dieser Zuführung ermöglicht werden kann.

Andererseits besteht die Möglichkeit, die Flüssigkeitszuführung durch mindestens ein Rohr in der Basisplatte zu bilden, was wiederum Vorteile bei der Wartung dieser Zuführungen mit sich bringt, wie z.B. das einfache Austauschen defekter Rohre.

Gemäß einer weiteren bevorzugten Ausgestaltung ist die erfindungsgemäße Plattenlageranordnung dadurch gekennzeichnet, daß mindestens zwei Düsen in den oberen Enden der Rohre bzw. der Bohrungen deren austretende Flüssigkeitsstrahlen unter einem Winkel zueinander sowie jeweils beide schräg gegen eine Oberfläche des Zentriervorsprungs oder der Ausrechnung richten, wobei zusätzlich die Möglichkeit besteht, die Flüssigkeitszuführung jeder Düse mit einem Absperrventil zu versehen und die Absperrventile über eine gemeinsame Schaltanordnung so zu steuern, daß sie abwechselnd öffnen und schließen.

Durch die vorgenannten Ausgestaltungsmöglichkeiten wird eine Ausführung realisierbar, bei der sich die Sockelplatte mit dem zu tragenden Objekt je nach Ansteuerung in verschiedene Richtungen dreht.

Dies kann auch dadurch erreicht werden, daß ein Rohr bzw. eine Bohrung der Flüssigkeitszuführung an ihrem oberen Ende mit einer periodisch schwenkbaren Düse ausgestattet ist, wodurch gleichzeitig eine Schwächung der Basisplatte durch eine größere Anzahl von Bohrungen vermieden werden kann.

Die Sockelplatte der erfindungsgemäßen Anordnung ist vorzugsweise mit einer Befestigungsvorrichtung für ein zu tragendes Objekt ausgestattet.

Die Flüssigkeitszuführung durch die Bohrungen bzw. Rohre in die Ausnehmung kann vorzugsweise durch eine Pumpe erfolgen, die die Flüssigkeit aus einer Reservoir unter Druck in die Rohre bzw. Bohrungen und damit in die Ausnehmung pumpt.

Vorteilhafterweise ist die Plattenanordnung dadurch gekennzeichnet, daß die Sockelplatte mindestens eine Durchgangsbohrung hat, durch die Flüssigkeit von ihrer Unterseite an Ihre Oberseite gelangen kann um dort auszutreten. Die Anordnung bekommt dadurch eine Verwendung als Springbrunnen, was, da als Flüssigkeit meist Wasser verwendet werden wird, leicht realisierbar und konstruktiv wenig aufwendig ist.

Desweiteren kann die Anordnung bei dieser Verwendung so augestaltet werden, daß eine Mündung einer Durchgangsbohrung an der Oberseite der Sockelplatte so angeordnet ist, daß die Richtung der durch die austretende Flüssigkeit entstehenden Kraft nicht durch die Drehachse der Sockelplatte geht, so daß ein Moment um die Drehachse entsteht. Die Sockelplatte wird auf diese Weise mit einem stetigen Drehantrieb ausgestattet, ohne daß weitere konstruktive Maßnahmen zur Herstellung der Drehung notwendig sind.

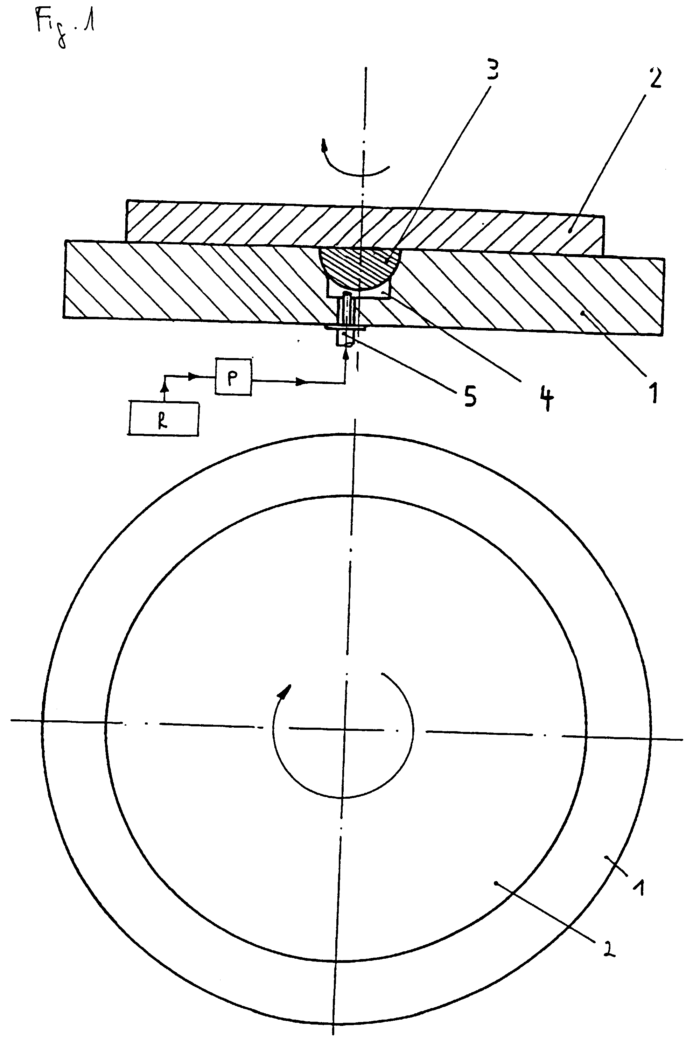

Anhand der beiliegenden Zeichnung wird nun im folgenden die erfindungsgemäße Plattenanordnung und hierbei speziell eine Vorrichtung zum Tragen eines aufrecht stehendes Objekts näher beschrieben.

Die einzige Figur zeigt hierbei einen Mittelschnitt durch eine erfindungsgemäße Anordnung zusammen mit einer darunter dargestellten Aufsicht.

Die Aufsicht sowie der Mittelschnitt nach der Figur stellen die Anordnung der Basisplatte 1 sowie der Sockelplatte 2 der erfindungsgemäßen Plattenlageranordnung dar.

Im oben gezeigten Mittelschnitt ist erkennbar, daß die Sockelplatte mit ihrer plan geschliffenen unteren Oberfläche auf der ebenfalls plan geschliffenen oberen Oberfläche der Basisplatte 1 aufliegt. Zentrisch in der Mitte der Sockelplatte 2 ist an ihrer Unterseite ein Zentriervorsprung 3 ausgebildet, der in diesem Ausführungsbeispiel eine kugelkalottenförmige Ausbildung aufweist. Dieser Zentriervorsprung 3 wird in einer Ausnehmung auf der Oberseite der Basisplatte 1 aufgenommen, die in ihrem oberen Bereich ebenfalls paßgenau zum Zentriervorsprung 3 kugelkalottenförmig ausgebildet ist, während in ihrem unteren Bereich ein zylinderischer Raum für die Aufnahme der zuzuführenden Flüssigkeit verbleibt.

In diesen Raum der Ausnehmung 4 mündet eine von der Unterseite der Basisplatte 1 ausgehende Flüssigkeitszuführung 5, die hier als in eine Bohrung eingeführtes Rohr mit sich verengendem Querschnitt dargestellt ist.

Die Flüssigkeitszuführung kann über eine Pumpe P mit einem Reservoir 2 für die Flüssigkeit, vorzugsweise Wasser, verbunden sein.

Durch die Inbetriebnahme der Pumpe P wird die Flüssigkeit aus dem Reservoir R unter Druck durch die Flüssigkeitszuführung 5 in den freien Raum der Ausnehmung 4 gepumpt, bis der Druck in der Ausnehmung 4 genügend angewachsen ist, um die Sockelplatte 2 mit dem nicht dargestellten, darauf stehenden Objekt soweit anzuheben, daß die Flüssigkeit durch den zwischen den kugelkalottenförmigen Körpern und zwischen den einander zugekehrten Flächen der Basisplatte 1 und der Sockelplatte 2 entstehenden Spalt strömen kann und hierbei einen dünnen Flüssigkeitsfilm bildet.

Durch das Aufrechterhalten und Regeln eines bestimmten Druckes durch die Pumpe P wird gewährleistet, daß überall zwischen den Flächen der Basisplatte und der Sockelplatte 2 sowie zwischen den Flächen der Ausnehmung 4 und des Zentriervorsprungs 3 ein gleichmäßiger Flüssigkeitsfilm aufrechterhalten wird, d.h., ein stabiler Zustand herrscht, bei dem die Sockelplatte praktisch reibungsfrei auf der Basisplatte gelagert ist.

Bei der dargestellten Anströmung lotrecht von unten wird keine Drehbewegung der Sockelplatte 2 verursacht. Durch die schräge Anströmung, z.B. aus mehreren Düsen, kann jedoch auch eine Drehbewegung hervorgerufen werden, so daß das manuelle Anstoßen der Sockelplatte 2 zur Drehung der Sockelplatte nicht mehr erforderlich ist.

## Patentansprüche

1. Plattenlageranordnung, insbesondere Vorrichtung zum Tragen eines aufrechtstehenden Objekts, z.B. eines Kunstobjekts oder eines Denkmals, mit
a) einer Basisplatte (1), und
b) einer auf der Basisplatte (1) angeordneten Sockelplatte (2), wobei
c) die Sockelplatte (2) auf einem Flüssigkeitsfilm, der vertikale und horizontale Kräfte auf die Sockelplatte (2) gleichermaßen aufnimmt, schwimmend um eine lotrechte Achse drehbar auf der Basisplatte (1) gelagert ist,
**dadurch gekennzeichnet,** daß
d) die Basisplatte (1) eine sich zu ihrer Oberseite hin öffnende Ausnehmung (4) aufweist, die einen von der Unterseite der Sockelplatte (2) abstehenden ZentrierVorsprung (3) schwimmend aufnimmt, oder die Sockelplatte eine sich zu ihrer Unterseite hin öffnende Ausnehmung aufweist, die einen von der Oberseite der Basisplatte bestehenden Zentriervorsprung schwimmend aufnimmt, wobei die Basisplatte mit mindestens einer Flüssigkeit in einen Spalt zwischen der Ausnehmung und dem Zentriervorsprung drückenden Flüssigkeitszuführung versehen ist.

2. Plattenlageranordnung nach Anspruch 1, dadurch gekennzeichnet, daß die ohne Flüssigkeitsfilm aufeinander zu liegen kommenden Flächen der Basisplatte (1) und der Sockelplatte (2) plan geschliffen sind.

3. Plattenlageranordnung nach einem der Ansprüche 1 oder 2, dadurch gekennzeichnet, daß der Zentriervorsprung (3) bzw. die Ausnehmung (4) jeweils zentrisch auf den Platten (1, 2) angeordnet sind.

4. Plattenlageranordnung nach einem der Ansprüche 1 bis 3, dadurch gekennzeichnet, daß die Sockelplatte (2) kreisscheibenförmig ausgebildet ist.

5. Plattenlageranordnung nach einem der Ansprüche 1 bis 4, dadurch gekennzeichnet, daß ein zumindest teilweise kugelkalottenförmig ausgebildeter Körper als Zentriervorsprung (3) und eine diesen im wesentlichen paßgenau aufnehmende, zumindest teilweise kugelkalottenförmig ausgebildete Ausnehmung (4) vorgesehen sind.

6. Plattenlageranordnung nach einem der Ansprüche 1 bis 4, dadurch gekennzeichnet, daß ein zumindest teilweise zylindrisch ausgebildeter Körper als Zentriervorsprung und eine diesen im wesentlichen paßgenau aufnehmende, zumindest teilweise zylindrisch ausgebildete Ausnehmung vorgesehen sind.

7. Plattenlageranordnung nach einem der Ansprüche 1 bis 6, dadurch gekennzeichnet, daß die Flüssigkeitszuführung (5) zentrisch mit der Rotationsachse der Sockelplatte (2) fluchtend in der Basisplatte (1) angeordnet ist.

8. Plattenlageranordnung nach einem der Ansprüche 1 bis 6, dadurch gekennzeichnet, daß eine weitere Flüssigkeitszuführung so in der der Basisplatte (1) angeordnet ist, daß der daraus austretende Flüssigkeitsstrahl schräg auf eine untere Fläche der Sockelplatte (2) oder des Zentriervorsprungs (3) trifft.

9. Plattenlageranordnung nach einem der Ansprüche 6 bis 8, dadurch gekennzeichnet, daß zumindest ein Teil der aus den Flüssigkeitszuführungen (5) austretenden Strahlen zur Zentrierung des zylinderförmigen Zentriervorsprungs (3) symmetrisch auf dessen zylindrische Oberfläche gerichtet sind.

10. Plattenlageranordnung nach einem der Ansprüche 1 bis 9, dadurch gekennzeichnet, daß die Flüssigkeitszuführung (5) aus mindestens einer Bohrung in der Basisplatte (1) besteht.

11. Plattenlageranordnung nach einem der Ansprüche 1 bis 9, dadurch gekennzeichnet, daß die Flüssigkeitszuführung (5) aus mindestens einem Rohr in der Basisplatte (1) besteht.

12. Plattenlageranordnung nach Anspruch 9 oder 10, dadurch gekennzeichnet, daß mindestens zwei Düsen in den oberen Enden der Rohre bzw. der Bohrungen deren austretende Flüssigkeitsstrahlen unter einem Winkel zueinander sowie jeweils schräg gegen eine Oberfläche der Sockelplatte (2) oder des Zentriervorsprungs (3) richten.

13. Plattenlageranordnung nach Anspruch 12, dadurch gekennzeichnet, daß die Flüssigkeitszuführung (5) jeder Düse mit einem Absperrventil versehen ist, und daß die Absperrventile über eine gemeinsame Schaltanordnung so steuerbar sind, daß sie abwechselnd öffnen und schließen.

14. Plattenlageranordnung nach Anspruch 9 oder 10, dadurch gekennzeichnet, daß mindestens ein Rohr bzw. eine Bohrung am oberen Ende mit einer periodisch schwenkbaren Düse ausgestattet ist.

15. Plattenlageranordnung nach einem der Ansprüche 1 bis 14, dadurch gekennzeichnet, daß die Sockelplatte (2) in ihrem oberen Bereich eine Befestigungsvorrichtung für ein zu tragendes Objekt aufweist.

16. Plattenlageranordnung nach einem der Ansprüche 1 bis 15, dadurchgekennzeichnet, daß die Sockelplatte (2) mindestens eine Durchgangsbohrung hat, durch die Flüssigkeit von ihrer Unterseite an ihre Oberseite gelangen kann um dort auszutreten.

17. Plattenlageranordnung nach Anspruch 16, dadurch gekennzeichnet, daß eine Mündung einer Durchgangsbohrung an der Oberseite der Sockelplatte (2) so angeordnet ist, daß die Richtung der durch die austretende Flüssigkeit entstehenden Kraft nicht durch die Drehachse der Sockelplatte geht, so daß ein Moment um die Drehachse entsteht.

## Claims

1. A plate supporting assembly, in particular a device for supporting an upright object such as e.g. a work of art or a monument, comprising
a) a base plate (1) and
b) a pedestal plate (2) arranged on said plate (1),
c) said pedestal plate (2) being supported by a film of liquid floatingly about a perpendicular axis rotatably on said base plate (1), said film of liquid receiving to the same degree the vertical and horizontal forces on said pedestal plate (2),
characterized in that
d) said base plate (1) comprises a recess (4) opening towards its upper side and receiving floatingly a centering projection (3) protruding from the underside of said pedestal plate (2), or said pedestal plate comprises a recess opening towards its underside and receiving floatingly a centering projection protruding from the upper side of said base plate, said base plate being provided with at least one liquid supply pressing liquid into a gap between said recess and said centering projection.

2. The plate supporting assembly according to claim 1, characterized in that the surfaces of said base plate (1) and said pedestal plate (2) coming to lie on each other without said film of liquid are ground flat.

3. The plate supporting assembly according to one of the claims 1 or 2, characterized in that said centering projection (3) and/or said recess (4) are each arranged centrally on said plates (1, 2).

4. The plate supporting assembly according to one of the claims 1 to 3, characterized in that said pedestal plate (2) is configured in the shape of circular disk.

5. The plate supporting assembly according to one of the claims 1 to 4, characterized in that one body at least partly in the shape of a spherical calotte is provided as centering projection (3) and a recess (4) formed at least partly as a spherical calotte and receiving the other substantially to a precise fit is provided.

6. The plate supporting assembly according to one of the claims 1 to 4, characterized in that one at least partly cylindrically shaped body is provided as the centering projection and a recess formed at least partly cylindrically shaped and receiving the other substantially to a precise fit is provided.

7. The plate supporting assembly according to one of the claims 1 to 6, characterized in that said liquid supply (5) is arranged centrally to the axis of rotation of said pedestal plate (2) in alignment with said base plate (1).

8. The plate supporting assembly according to one of the claims 1 to 6, characterized in that a further liquid supply is arranged in said base plate (1) in such a way that the jet of liquid emerging therefrom impinges at an angle on the lower surface of said pedestal plate (2) or of said centering projection (3).

9. The plate supporting assembly according to one of the claims 6 to 8, characterized in that at least a part of the jets emerging from the supplies (5) of liquid are oriented to center said cylindrical centering projection (3) symmetrically to the cylindrical surface thereof.

10. The plate supporting assembly according to one of the claims 1 to 9, characterized in that said liquid supply (5) comprises at least one hole in said base plate (1).

11. The plate supporting assembly according to one of the claims 1 to 9, characterized in that said liquid supply (5) comprises at least one tube in said base plate (1).

12. The plate supporting assembly according to claim 9 or 10, characterized in that at least two nozzles are provided in the upper ends of said tubes or holes, the emerging jets of liquid of which are directed at an angle to each other as well as are inclined each against a surface of said pedestal plate (2) or said centering projection (3).

13. The plate supporting assembly according to claim 12, characterized in that said liquid supply (5) of each nozzle is provided with a shut-off valve, and that said shut-off valves are controllable via a common switching assembly so that they alternately open and close.

14. The plate supporting assembly according to claim 9 or 10, characterized in that at least one tube or one hole is provided at its upper end with an periodically pivotable nozzle.

15. The plate supporting assembly according to one of the claims 1 to 14, characterized in that said pedestal plate (2) comprises in its upper portion a means of securing an object to be supported.

16. The plate supporting assembly according to one of the claims 1 to 15, characterized in that said pedestal plate (2) comprises at least one through-hole through which liquid is able to progress from its underside to its upper side where it emerges.

17. The plate supporting assembly according to claim 16, characterized in that an opening of a through-hole is arranged on the upper side of said pedestal plate (2) so that the direction of the force resulting from the emerging liquid fails to pass through the axis of rotation of said pedestal plate (2), resulting in a moment about the axis of rotation.

## Revendications

1. Structure d'appui en plaques, en particulier un dispositif pour le support d'un objet en position debout, par exemple d'un objet d'art ou d'un monument, comprenant
a) une plaque de base (1), et
b) une plaque formant socle (2), disposée sur la plaque de base (1),
c) la plaque formant socle (2) étant montée sur la plaque de base (1) de manière à flotter sur une pellicule de liquide, qui absorbe uniformément les forces verticales et horizontales agissant sur la plaque formant socle (2), et de manière à tourner autour d'un axe vertical,
caractérisée en ce que
d) la plaque de base (1) présente un évidement (4) qui est ouvert en direction de sa face supérieure et dans lequel est logée de manière flottante une saillie de centrage (3) dépassant de la face inférieure de la plaque formant socle (2), ou la plaque formant socle présente un évidement qui est ouvert en direction de sa face inférieure et qui loge, de manière flottante, une saillie de centrage dépassant de la face supérieure de la plaque de base, la plaque de base étant munie d'au moins une arrivée de liquide comprimant le liquide dans un interstice ménagé entre l'évidement et la saillie de centrage.

2. Structure d'appui en plaques selon la revendication 1, caractérisée en ce que les surfaces de la plaque de base (1) et de la plaque formant socle (2), qui sont amenées les unes contre les autres sans pellicule de liquide entre elles, subissent une rectification plane.

3. Structure d'appui en plaques selon l'une des revendications 1 ou 2, caractérisée en ce que la saillie de centrage (3) respectivement l'évidement (4) sont disposés chacun de manière centrée sur les plaques (1, 2).

4. Structure d'appui en plaques selon l'une des revendications 1 à 3, caractérisée en ce que la plaque formant socle (2) est réalisée sous forme de disque circulaire.

5. Structure d'appui en plaques selon l'une des revendications 1 à 4, caractérisée en ce qu'il est prévu un corps, ayant du moins partiellement une forme de calotte sphérique et faisant office de saillie de centrage (3), qui vient se loger de manière sensiblement ajustée dans un évidement (4), prévu à cet effet, lequel présente au moins partiellement une forme de calotte sphérique.

6. Structure d'appui en plaques selon l'une des revendications 1 à 4, caractérisée en ce qu'il est prévu un corps, ayant du moins partiellement une forme cylindrique et faisant office de saillie de centrage, qui vient se loger de manière sensiblement ajustée dans un évidement, prévu à cet effet, lequel présente au moins partiellement une forme cylindrique.

7. Structure d'appui en plaques selon l'une des revendications 1 à 6, caractérisée en ce que l'arrivée de liquide (5) est disposée de manière centrée avec l'axe de rotation de la plaque formant socle (2) et de façon à être alignée dans la plaque de base (1).

8. Structure d'appui en plaques selon l'une des revendications 1 à 6, caractérisée en ce qu'une autre arrivée de liquide est disposée de telle manière dans la plaque de base (1) que le jet de liquide en sortant est projeté en biais sur une surface inférieure de la plaque formant socle (2) ou de la saillie de centrage (3).

9. Structure d'appui en plaques selon l'une des revendications 6 à 8, caractérisée en ce qu'au moins une partie des jets de liquide, provenant des arrivées de liquide (5), est dirigée symétriquement sur la surface cylindrique de la saillie de centrage (3) de forme cylindrique, en vue du centrage de cette dernière.

10. Structure d'appui en plaques selon l'une des revendications 1 à 9, caractérisée en ce que l'arrivée de liquide (5) se compose d'au moins un perçage dans la plaque de base (1).

11. Structure d'appui en plaques selon l'une des revendications 1 à 9, caractérisée en ce que l'arrivée de liquide (5) se compose d'au moins un tuyau dans la plaque de base (1).

12. Structure d'appui en plaques selon la revendication 9 ou 10, caractérisée en ce qu'au moins deux buses orientent, dans les extrémités supérieures des tuyaux et respectivement des perçages, leurs jets de liquide, de manière à former, en sortant, un angle entre eux, ainsi que de manière inclinée en direction d'une surface supérieure de la plaque formant socle (2) ou de la saillie de centrage (3).

13. Structure d'appui en plaques selon la revendication 12, caractérisée en ce que l'arrivée de liquide (5) de chaque buse est munie d'une soupape d'arrêt et en ce que les soupapes d'arrêt sont commandées par un système commun de commande de manière à s'ouvrir et à se fermer en alternance.

14. Structure d'appui en plaques selon la revendication 9 ou 10, caractérisée en ce qu'au moins un tuyau et respectivement un perçage est muni, à l'extrémité supérieure, d'une buse à pivotement périodique.

15. Structure d'appui en plaques selon l'une des revendications 1 à 14, caractérisée en ce que la plaque formant socle (2) présente, dans sa zone supérieure, un dispositif de fixation pour l'objet à porter.

16. Structure d'appui en plaques selon l'une des revendications 1 à 15, caractérisée en ce que la plaque formant socle (2) comprend au moins un perçage de passage à travers lequel le liquide peut remonter de sa face inférieure à sa face supérieure pour sortir à cet endroit.

17. Structure d'appui en plaques selon la revendication 16, caractérisée en ce qu'une embouchure d'un perçage de passage est disposée dans la face supérieure de la plaque formant socle (2) de sorte que la direction de la force générée par la sortie de liquide ne passe par l'axe de rotation de la plaque formant socle si bien qu'un couple est engendré autour de l'axe de rotation.
